**Europäisches Patentamt**

**European Patent Office**

**Office européen des brevets**

(11) Veröffentlichungsnummer : **0 457 024 B1**

(12) **EUROPÄISCHE PATENTSCHRIFT**

(45) Veröffentlichungstag der Patentschrift :
20.07.94 Patentblatt 94/29

(21) Anmeldenummer : **91105714.9**

(22) Anmeldetag : **11.04.91**

(51) Int. Cl.⁵ : **G01J 1/42,** B23K 26/06,
A61B 17/36

(54) **Laserleistungsmessung.**

(30) Priorität : **14.05.90 DE 4015447**

(43) Veröffentlichungstag der Anmeldung :
**21.11.91 Patentblatt 91/47**

(45) Bekanntmachung des Hinweises auf die
Patenterteilung :
**20.07.94 Patentblatt 94/29**

(84) Benannte Vertragsstaaten :
**DE FR GB IT**

(56) Entgegenhaltungen :
**EP-A- 0 236 008**

(56) Entgegenhaltungen :
DE-A- 3 205 507
US-A- 4 949 345
**PATENT ABSTRACTS OF JAPAN, vol. 10, no.
372 (M-544)(2429) 11. Dezember 1986 & JP-
A-61 165 289**

(73) Patentinhaber : **Deutsche Aerospace AG
D-81663 München (DE)**

(72) Erfinder : **Barton, Udo
Forellenstrasse 20
W-8000 München 82 (DE)**
Erfinder : **Ruf, Gerhard
Pfahlstrasse 15
W-8073 Eichstätt (DE)**

## Beschreibung

Die Erfindung betrifft eine Vorrichtung zur Messung der Strahlungsleistung eines Lasers mit einem im Laserhauptstrahl angeordneten ersten teildurchlässigen Spiegel über den ein Teil der Strahlung ausgekoppelt wird, und einem im Teilstrahl angeordneten optoelektrischen Meßwandler

Bei Hochleistungslasern, insbesondere für chirurgische Zwecke, ist es notwendig, die aus dem Laserresonator ausgekoppelte Leistung laufend zu messen. Hierzu ist bekannt, im Laserhauptstrahl einen teildurchlässigen Spiegel anzuordnen, über den ein geringer Prozentsatz der Strahlungsleistung durch Reflexion am Spiegel ausgekoppelt und auf eine Photodiode oder dgl. gerichtet wird (DE 32 05 507 C2). Es hat sich jedoch herausgestellt, daß zum einen das Reflexionsvermögen gängiger Teilerplatten für parallel bzw. senkrecht polarisiert auftreffendes Licht unterschiedlich groß ist und zum anderen sich die Vorzugsrichtung der Polarisationsebene beim Pumpen von laserfähigen Kristallen wie z.B. Nd-YAG verändert, so daß abhängig von der Pumpleistung der bezüglich der Vertellerplatte senkrecht bzw. parallel polarisiert auftreffende Anteil der Laserstrahlung unterschiedlich groß ist. Bei fest angeordneter Teilerplatte wird ein bestimmter Anteil des parallel bzw. senkrecht polarisierten Lichtes ausgekoppelt, die Summe beider Anteile ist jedoch wegen der oben geschilderten Verhältnisse nicht proportional zur jeweiligen Laserleistung.

Die Erfindung hat sich daher zur Aufgabe gesetzt, eine Vorrichtung zur Messung der Strahlungsleistung eines Lasers zu schaffen, der über einen weiten Meßbereich proportional und unabhängig von der Vorzugsrichtung der Polarisationsebene der Laserstrahlung arbeitet. Diese Aufgabe wird durch eine nach den Merkmalen des Patentanspruchs 1 ausgebildete Vorrichtung gelöst.

Es kann gezeigt werden, daß durch die Verwendung eines zweiten, in seinen Eigenschaften und seiner Winkelstellung zum einfallenden Strahl gleichen, jedoch bezüglich der räumlichen Orientierung um 90° gedrehten Spiegel, die im reflektierten Strahl des zweiten Spiegels gemessene Strahlungsleistung unabhängig vom Polarisationszustand des Laserhauptstrahls ist:

Die Intensität I des Laserhauptstrahls setzt sich aus zwei Komponenten P und S additiv zusammen, deren Polarisationsrichtungen parallel (P) bzw. senkrecht (S) zur Einfallsebene bezogen auf den ersten Spiegel orientiert sind. Für beide Komponenten besitzt der erste Spiegel unterschiedliche Reflexionsvermögen $R_{P1}$ und $R_{S1}$. Die Intensität $I_1$ des ersten Teilstrahls nach der Reflexion am ersten Spiegel beträgt dann:

$$I_1 = P \cdot R_{P1} + S \cdot R_{S1}.$$

Die Komponenten des Teilstrahls werden am zweiten Spiegel mit den Reflexionskoeffizienten $R_{P2}$ bzw. $R_{S2}$ reflektiert, wobei jedoch aufgrund der 90°-Drehung des zweiten Spiegels die ursprüngliche P-Komponente zur S-Komponente wird und umgekehrt. Es gilt also für die Intensität des zweiten Teilstrahls nach der Reflexion am zweiten Spiegel:

$$I_2 = P \cdot R_{P1} \cdot R_{S2} + S \cdot R_{S1} \cdot R_{P2}$$

Da $R_{P1} = R_{P2}$ und $R_{S1} = R_{S2}$ ist, gilt für die gesamte, zweimalige Reflexion:

$$R_{P1} \cdot R_{S2} = R_{P2} \cdot R_{S1} = R_{ges} = \text{konst.}$$
$$I_2 = R_{ges} (P + S).$$

Die Intensität $I_2$ ist damit proportional zur Intensität I des Laserhauptstrahls und zwar unabhängig von der Aufteilung der Komponenten P und S innerhalb der Summe (P + S), wobei der Proportionalitätsfaktor $R_{ges}$ konstant ist.

Da die völlige Unabhängigkeit vom Polarisationszustand des einfallenden Lichtes nur dann gegeben ist, wenn auch für beide teildurchlässigen Spiegel ein identischer Verlauf des Reflexionsgrades in Abhängigkeit der jeweiligen Polarisationsebene des auftreffenden Lichtes ist, ist es zweckmäßig, wenn gemäß Patentanspruch 2 die beiden Spiegel aus einer gleichmäßig beschichteten Teilerplatte hergestellt sind.

Bei Verwendung von die Laserstrahlung weiterführenden Lichtleitsystemen, wie z.B. Faseroptiken, ist es zweckmäßig, den ersten teildurchlässigen Spiegel zwischen dem Ausgang des Laserresonators und der Einkopplung in das Lichtleitsystem anzuordnen.

Die Erfindung wird im folgendes anhand eines in den Figuren teilweise schematisch dargestellten Ausführungsbeispieles näher beschrieben:

Ein Laserkristall 2, z.B. ein Nd-YAG-Kristall ist zwischen einem hochreflektierenden Spiegel 3 mit einem Reflexionsvermögen von nahezu 100 % sowie einem Auskoppelspiegel 4 mit einem Reflexionsvermögen von ca. 90° angeordnet, wobei dieser Laserresonator mittels einer Pumplampe 1 gepumpt wird. Die aus dem Spiegel 4 austretende Laserhauptstrahlung 7 trifft auf einen unter einem Winkel β zur Strahlrichtung angeordneten teildurchlässigen Spiegel 5 über den 0,5 % aus dem Laserhauptstrahl durch Reflexion ausgekoppelt werden. Dieser Teilstrahl 8.1 trifft auf einen zweiten teildurchlässigen Spiegel 6, der wie in der Schnittzeichnung A-A dargestellt ist, bezüglich des Teilstrahles 8.1 im gleichen Winkel angeordnet ist wie der erste Spiegel 5 zum Hauptstrahl 7, jedoch gegenüber dem ersten Spiegel 5 hinsichtlich seiner räumlichen Orientierung um 90° gedreht ist, so daß der Teilstrahl 8.1 eine senkrecht aus der Zeichnungsebene herausweisende Ablenkung erfährt. Es sei hierbei darauf hingewiesen, daß der Winkel β nicht zwingend 45° betragen muß, wie in den Figuren dargestellt ist; der zweite Spiegel 6 muß jedoch bezüglich einer beliebigen Polarisationsrichtung der Laserhauptstrahlung eine um 90° gegenüber dem ersten Spiegel 5 gedrehte Spiegelfläche aufweisen.

Der an dem zweiten Spiegel 6 reflektierte Teilstrahl 8.2 wird dann auf einen optoelektrischen Meßwandler gerichtet, der im wesentlichen eine Fotodiode und eine deren Durchgangsstrom messende Einrichtung aufweist.

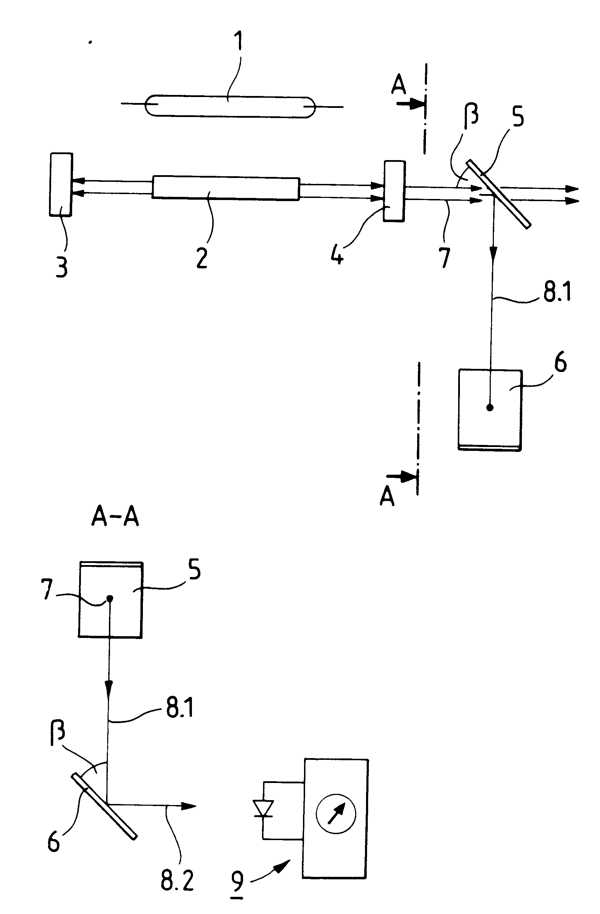

**Patentansprüche**

1. Vorrichtung zur Messung der Strahlungsleistung eines Lasers mit einem im Laserhauptstrahl (7) angeordneten ersten teildurchlässigen Spiegel (5), über den ein Teil der Strahlung ausgekoppelt und auf einen optoelektrischen Meßwandler (9) gerichtet wird, **gekennzeichnet** durch folgende Merkmale:
   a) die aus dem Laserhauptstrahl (7) ausgekoppelte Strahlung wird durch Reflexion am ersten teildurchlässigen Spiegel (5) in einen ersten Teilstrahl (8.1) ausgekoppelt,
   b) in dem ersten Teilstrahl (8.1) ist ein zweiter teildurchlässiger Spiegel (6) angeordnet, an dem durch Reflexion Strahlung in einen zweiten Teilstrahl (8.2.) ausgekoppelt wird,
   c) der zweite teildurchlässige Spiegel ist bezüglich des ersten Teilstrahles (8.1) im gleichen Winkel (β) angeordnet wie der erste teildurchlässige Spiegel (5) zum Laserhauptstrahl (7) und der zweite teildurchlässige Spiegel (6) ist gegenüber dem ersten teildurchlässigen Spiegel (5) hinsichtlich seiner räumlichen Orientierung um 90° gedreht,
   d) beide teildurchlässigen Spiegel (5, 6) weisen einen gleichen Verlauf des Reflexionsgrades in Abhängigkeit von der Polarisationsebene der auf sie auftreffenden Laserstrahlung auf,
   e) der optoelektrische Meßwandler (9) ist im zweiten Teilstrahl (8.2) angeordnet.

2. Vorrichtung nach Anspruch 1, **dadurch gekennzeichnet**, daß der erste und zweite teildurchlässige Spiegel (5, 6) aus einer, über ihre Fläche gleichmäßig beschichteten Teilerplatte hergestellt sind.

3. Vorrichtung nach Anspruch 1 oder 2, **dadurch gekennzeichnet**, daß der erste teildurchlässige Spiegel (5) zwischen dem Laser und einem Lichtleitsystem angeordnet ist.

**Claims**

1. Device for measuring radiation output of a laser comprising a partially permeable mirror (5) within the laser main beam (7), by means of which a portion of the beam is separated and directed towards and opto-electrical measuring converter (9), **characterised by** the following features:
   a) the radiation which is separated from the laser main beam (7) is separated by way of reflection at the first partially permeable mirror (5) into a first beam portion (8.1);
   b) a second partially permeable mirror (6) is arranged within the first beam portion (8.1), where radiation is separated by way of reflection into a second beam portion (8.2);
   c) the second partially permeable mirror is arranged, relative to the first beam portion (8.1), at the same angle (β) as the first partially permeable mirror (5) relative to the laser main beam (7), and the second partially permeable mirror (6) is rotated, relative to the first partially permeable mirror (5), by 90° in its space orientation;
   d) the extent of degree of reflection of both partially permeable mirrors (5, 6) in dependence on the polarisation plane of a respective laser beam is equal;
   e) the opto-electrical measuring converter (9) is accommodated in the second partial beam (8.2).

2. Device according to claim 1, **characterised in that** the first and second partially permeable mirror (5, 6) are made of a dividing plate the surface of which is evenly coated.

3. Device according to claim 1 or 2, **characterised in that** the first partially permeable mirror (5) is positioned between the laser and a light-conducting system.

**Revendications**

1. Dispositif pour mesurer la puissance de rayonnement d'un laser, comportant un premier miroir (5) semi-réfléchissant qui est disposé sur le trajet du rayon principal (7) du laser et au moyen duquel une partie du rayonnement est détachée et dirigée sur un convertisseur de mesure (9) opto-électronique, caractérisé par les caractéristiques suivantes:
   a) le rayonnement détaché du rayon principal (7) du laser forme par réflexion sur le premier miroir (5) semi-réfléchissant un premier rayon partiel (8.1),
   b) un deuxième miroir (6) semi-réfléchissant à l'aide duquel un deuxième rayon partiel (8.2) est détaché par réflexion est placé sur le trajet du premier rayon partiel (8.1),
   c) le deuxième miroir semi-réfléchissant est disposé avec le même angle (β) par rapport au premier rayon partiel (8.1) que celui formé entre le premier miroir (5) semi-réfléchissant et le rayon laser principal et le deuxième miroir (6) semi-réfléchissant est tourné de 90° dans l'espace par rapport au premier miroir (5) semi-réfléchissant.

d) les deux miroirs (5, 6) semi-réfléchissants présentent une même variation du facteur de réflexion en fonction du plan de polarisation du rayonnement laser qui les frappe,

e) le convertisseur opto-électronique (9) est disposé sur le trajet du deuxième rayon partiel (8.2).

2. Dispositif selon la revndication 1, caractérisé par le fait que les premier et deuxième miroirs (5, 6) semi-réfléchissants sont constitués par une lame de division dont la surface est pourvue d'un revêtement homogène.

3. Dispositif selon la revndication 1, caractérisé par le fait que le premier miroir semi-réfléchissant (5) est disposé entre le laser et système guide de lumière.